# EUROPEAN PATENT SPECIFICATION

(11) **EP 2 345 574 B1**
(45) Date of publication and mention of the grant of the patent: **31.10.2012**
(21) Application number: 10425007.1
(22) Date of filing: 14.01.2010
(51) Int. Cl.: B62D 57/00, B62D 57/02, B62D 57/024

(54) **Impulse traction method and device**
Trägheitsantriebsverfahren und -vorrichtung
Procédé et dispositif de traction inertielle

(43) Date of publication of application: 20.07.2011
(73) Proprietor: Falesiedi, Osvaldo, 10080 San Benigno Canavese (IT)
(72) Inventor: Falesiedi, Osvaldo, 10080 San Benigno Canavese (IT)
(74) Representative: Borsano, Corrado

(56) References cited:
- EP-A2- 0 430 161
- DE-A1- 2 101 375
- DE-A1- 2 405 343
- JP-A- 60 085 085

## Description

### Field of the invention

The present invention relates to an impulse traction method and device, suitable for any gravitational environment.

### Description of the prior art

According to the prior art there are two traction systems for ground vehicles or, anyway, for vehicles suitable to move in gravitational systems: wheel traction system (tyres, iron, etc.) and tracked traction system.

Although the tracked traction systems are the most suitable on particularly soft grounds, they are not suitable on delicate surfaces, above all when it is necessary to protect the ground, such as for example in archaeological excavations.

Moreover, both traction systems are not suitable when it is necessary to climb over an obstacle with considerable dimensions, above all when the obstacle should not be damaged.

Examples of devices of the prior art are given in DE2101375, which describes the preamble of claim 1.

### summary of the invention

The aim of the present invention is to provide an impulse traction device suitable to solve all the problems set forth above.

The subject of the present invention is an impulse traction device according to claim 1.

A further aim of the present invention is to provide an impulse traction method, suitable to solve all the problems set forth above.

The subject of the present invention is also an impulse traction method, according to claim 16.

The dependent claims describe the preferred embodiments of the invention, and are an integral part of this description.

### Brief description of the Figures

Further characteristics and advantages of the invention will be more apparent in light of a detailed description of a preferred, but non-exclusive, embodiment of an impulse traction method and device, shown with the help of the drawings that are attached hereto, which are merely illustrative and not limitative, in which:
Figure 1 shows three steps of a forward movement sequence of the device according to the present invention;
Figure 2 shows a prototype that includes the device of figure 1;
Figures 3a and 3b show the invention as an alternative embodiment of the device in figure 2;
Figure 4 shows a further alternative embodiment of the device in figure 3;
Figure 5 shows an alternative embodiment that includes the solutions shown in the previous figures;

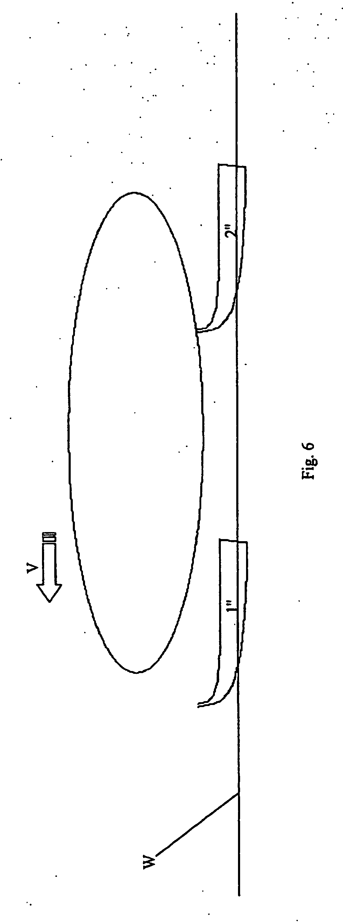

Figure 6 shows an alternative embodiment of the invention that is particularly suitable for moving in water.

In the drawings the same reference numbers and letters identify the same elements or components.

### Detailed description of a preferred embodiment of the invention

An impulse traction device according to a first alternative embodiment of the present invention comprises at least a pair 1 and 2 of support elements reciprocally movable between a proximal and a distal position along a direction of movement. Each of said support elements has a different coefficient of friction with respect to a support surface S according to two opposite senses of the same direction of movement.

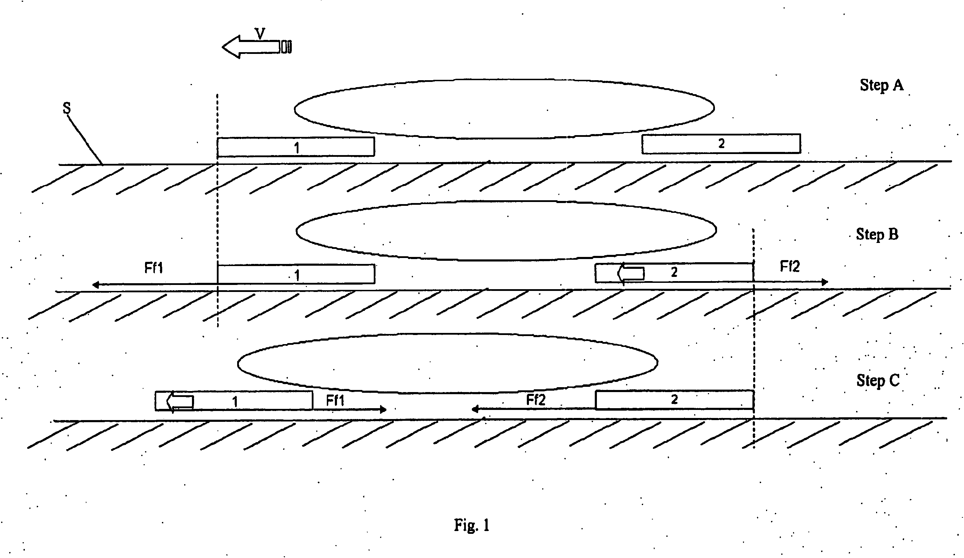

With reference to figure 1, the first step, step A, represents a moment when the device is stationary and said support elements 1 and 2 are in a reciprocal distal position.

During a reciprocal approach step, step B of figure 1, of said support elements, a first element 1 (or 2) of said support elements develops a first friction force Ff1 which makes the element integral with said support surface S, while a second element 2 (or 1) of said support elements develops a second friction force Ff1 that is lower than said first friction force, namely Ff1>Ff2, said second support element sliding towards said first support element on said support surface S. During a step of reciprocal departure, step C of figure 1, the friction force Ff2 developed by said second support element is higher than the friction force Ff1 developed by said first support element, namely Ff2>Ff1, therefore said first element 1 (or 2) is pushed forward, see arrow V in the figures, and the traction device moves forward along said direction of movement.

According to the example shown, the two support elements have an anisotropy of friction with respect to said support surface, with same reciprocal direction towards V, otherwise the device would not move forward, but it would oscillate between two positions with respect to said support surface S.

The description clearly shows also that said anisotropy of friction should at least be partially aligned with said direction of contraction and extension of the two support elements 1 and 2.

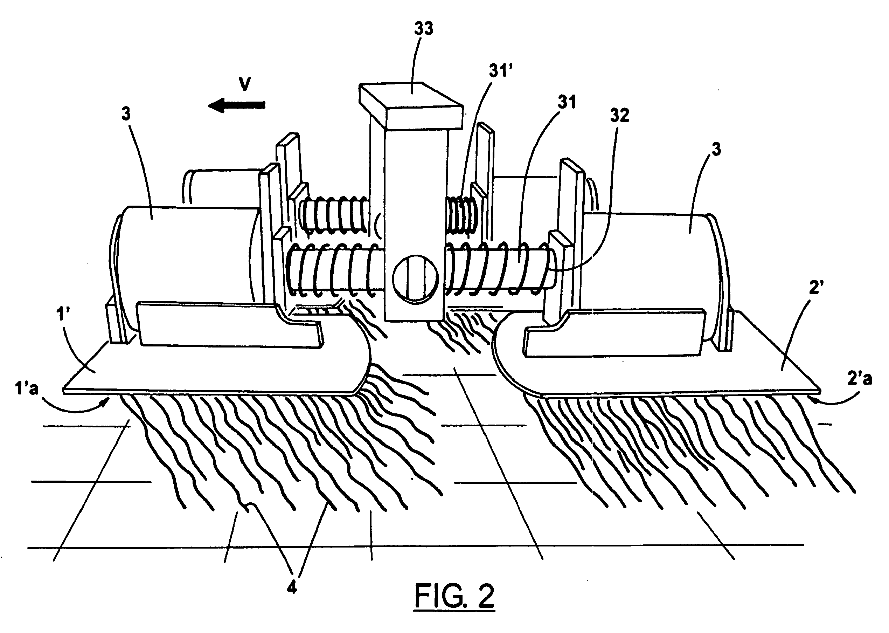

Figure 2 shows a prototype of the traction device according to the present invention.

A first pair of support elements 1' and 2' are associated by means of a pair of electromagnets having a push-pull configuration, each of them being integral with one of said support elements 1' and 2', so that their simultaneous action is of reciprocal contraction and extension. In particular, the two electromagnets 3 are associated to two opposite ends of an interconnection element 31, for example an axis. A spiral spring 32, winded around said axis 31, determines the extension of the traction device when said electromagnets are deactivated. Thus, when the two electromagnets are activated, they attract said axis 31 from both sides, determining the compression of the spring 32 concomitant with the contraction of the traction device. Therefore, said elastic means are suitable to contrast the approaching (or the departing) action of said approaching or departing means 3 and to make the two support elements return to the distal (or proximal) position when the two approaching elements are deactivated.

According to another alternative embodiment, the spiral spring 32 makes the two support elements 1' and 2' approach when said electromagnets are deactivated, while when said electromagnets are activated they exert an approaching action on said support elements 1' and 2'.

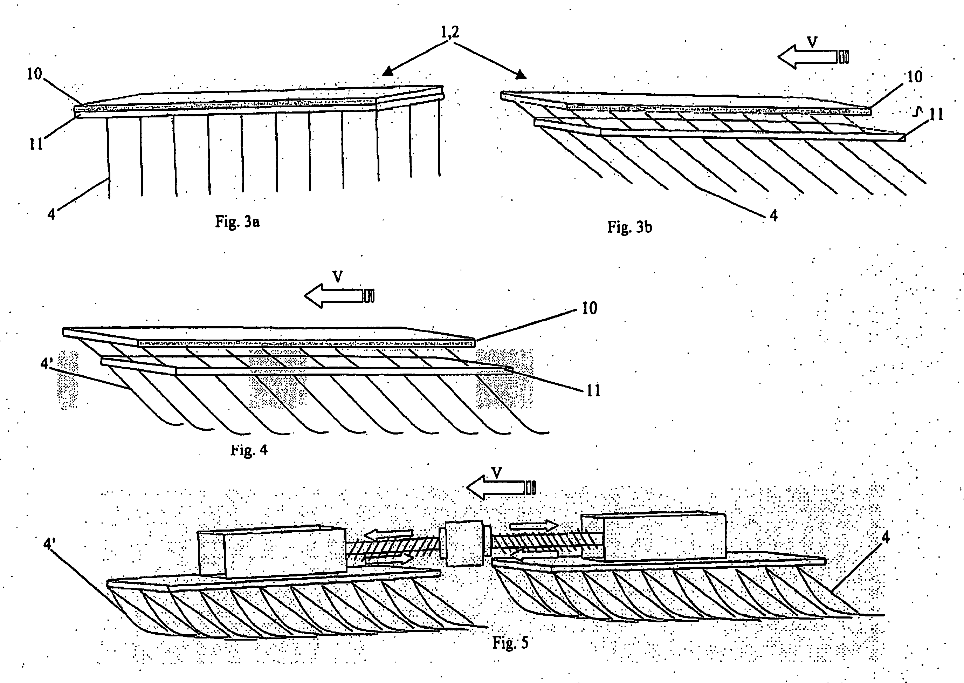

According to the alternative embodiment shown in figures 2 and 5, said coefficient of anisotropic friction is realized by means of a plurality of long-limbed elements 4, projecting from the lower surfaces 1'a and 2'a of said support elements, facing the support surface S and inclined, preferably all in the same way, with an appropriate angle contained in a plane perpendicular to said lower surfaces 1'a and 2'a of said support elements. Preferably said plane, perpendicular to said lower surfaces 1'a and 2'a, is parallel to said approaching/departing direction of said support elements and thus to said direction of movement of the traction device.

By giving appropriate folds to said long-limbed elements 4, as shown in figure 2, the elements themselves become particularly flexible, thus when the contraction and the extension occur at predetermined frequencies, the traction device does not slide along the support surface S, but it can leap, and therefore it can climb over obstacles, even with considerable dimensions. On the other hand, when the contraction and the extension occur at other frequencies, the traction device moves in a quite continuous way, to the extent that it is not possible to see the contraction/distension of the support elements of the device with the naked eye.

When the traction device comprises springs 32, also their stiffness contributes to said impulse behaviour of the traction system.

In addition to the springs, it is also possible to use dampers suitable for varying the elastic response of said springs.

According to a preferred embodiment of the invention, a first pair of support elements 1' and 2' is put next to a second pair of support elements and their respective axis 31 and 31' are made integral with and are spaced out by a cross bridge 33. According to said alternative embodiment the functioning of said first pair of support elements is independent from the functioning of said second pair, thus allowing the traction device to move according to curve trajectories.

According to a further alternative embodiment of the invention, see figures 3a and 3b, each support element 1 or 2 comprises a first plate 10 from which long-limbed elements 4 project and a second plate 11 placed under said first plate comprising as many through holes as the number of long-limbed elements, so that said long-limbed elements can pass through said through holes. A translation of said second plate with respect to said first plate determines a variation of the angle of inclination of said long-limbed elements. Thus, it is possible to vary the coefficient of friction of each support element with respect to a support surface S, also inverting the anisotropy of the coefficient of friction of said support elements, the traction device may move both forward and backward and, when it includes two independent pairs of support elements, as shown in fig. 2, it may rotate around itself.

According to a further preferred embodiment, said long-limbed elements 4 are numerous and are particularly flexible, as shown in figure 4, in order to guarantee a lower stiffness of the support of the traction device with respect to the ground, while when the long-limbed elements shown in figures 3a and 3b are less numerous, they are more stiff.

According to a further alternative embodiment, shown in fig. 5, stiff and flexible elements 4 are used at the same time, with the flexible elements being slightly longer than the stiff elements, so that the first determine a high coefficient of friction in a sense of said direction of movement, while the latter cooperate with the first in order to support the weight of the traction device and also of possible loads carried by it.

Said long-limbed elements 4 of both types may comprise respectively, for example, stiff metal wires and very flexible wires made of metal or of another material. By limiting the number of stiff elements, the traction device is particularly suitable for being used on delicate and crumbly surfaces, such as, for example, in archaeological excavations, etc..

Moreover the end of each of said long-limbed elements, namely the part that will come into contact with said support surface S, may be branched, namely it may comprise a plurality of terminal parts suitable to open like the fingers of a web-footed bird when it comes into contact with the ground, in order to limit the pressure exerted on it, and then suitable to close in order to limit the friction during the forward sliding of the support element to which said long-limbed elements are connected.

Said long-limbed elements may be made, according to what is necessary, of metals such as steel of various types, or carbon fibres or synthetic fibres.

Moreover, long-limbed elements of different types may be associated in order to obtain a particular behaviour of the traction device, also according to its context of use. According to further unclaimed embodiments, said support element may have shapes different from those previously described, that may comprise, for example, portions of cylindrical surfaces, etc., moreover said anisotropy of the coefficient of friction of the surfaces 1'a and 2'a of the support elements may be realized in other ways, for example by means of asymmetric prisms or nails, such as for example in certain grates, etc. These unclaimed embodiments can be realized by the person skilled in the art.

According to another aspect of the invention, said contraction and extension of said support elements may be realized by means of electric, mechanical, pneumatic, oleodynamic actuators, and also by means of internal combustion engines.

Moreover, it is not necessary to use two opposed actuators as shown in the prototype of figure 2, since a single actuator is enough to determine said contraction and extension.

Also the balancing of the weights on a means of transport based on said traction device may be carried out by the person skilled in the art.

According to another aspect of the invention, the support elements may be more than two, and the contractions may be consequential along a direction of movement in the sense of the movement.

According to a further preferred embodiment of the invention, said axis 31 may comprise one or more articulated joints so that the traction device may move forward along a curve trajectory without having to couple two or more pairs, namely two chains, of support elements. According to a further unclaimed embodiment shown in figure 5, the present invention may be suitable for moving in water. In particular, said first and second support element comprise a lower hull-shaped surface 1 '' a and 2"a, whose stem and whose stern have a different resistance to the forward movement on a water surface W, thus having a difference friction force according to the sense of the stress exerted to the support element. Two pair of support elements may be coupled in order to obtain a sort of catamaran. Moreover, in another alternative embodiment a rudder is used.

According to an unclaimed embodiment, the described traction device may be appropriately modified in order to move on a vertical glass, therefore on a very smooth surface. In particular, each of said support elements may comprise at least a pneumatic suction cup, thus, according to a vertical climbing direction along a vertical surface, the support element 1, namely the upper element, comes unstuck from the vertical surface and the traction device extends, then the pneumatic suction cups of the support element 1 stick on the vertical surface, after than the support element 2, namely the lower element, comes unstuck from the vertical surface and the traction device contracts, therefore the respective pneumatic suction cups stick, etc..

According to such embodiment, the coefficient of friction between each support element and a support surface is no longer anisotropic, but it is variable through time.

Thus according to the present invention an operating method of a traction device comprising at least a first (1,1',1'') and a second (2, 2',2 '') support element, aligned along a forward movement direction, each of them having a variable coefficient of friction during a forward movement of the traction device, being said support elements reciprocally movable between a proximal position and a distal position along said direction of movement, the method comprising that the following steps are performed at least once:
- lowering of the coefficient of friction of said first 1 support element,
- departing of said first support element from said second support element,
- increasing of the coefficient of friction of said first support element,
- lowering of the coefficient of friction of said second support element,
- approaching of said second support element to said first support element.

On the contrary, when the coefficient of friction does not vary through time with the contractions of the support element, then it is anisotropic and the method is reduced to the mere contraction of the support elements.

Therefore, in general, the coefficient of friction has to be variable, according to the time with the contraction of the support elements, or according to a sense of said direction of movement.

The elements and the characteristics described in the different preferred embodiments may be combined without departing from the scope of the present invention as defined by the claims.

For example, a combination of the aforementioned characteristics may allow to realize amphibious traction devices.

## Claims

1. Impulse traction device comprising at least a first support element (1, 1', 1") and a second support element (2, 2', 2'') reciprocally movable between a proximal position and a distal position; each support element having a variable coefficient of friction with respect to a support surface (S,W), so that during a reciprocal approaching movement a friction force (Ff1) developed by one of said support elements prevails (Ff1>Ff2, Ff1<Ff2) and during a reciprocal departing movement of said support elements a friction force (Ff2) developed by the other of said support elements prevails (Ff1<Ff2, Ff1>Ff2), wherein said coefficient of friction is anisotropic along a reciprocal direction of movement (V) of said support elements(1,1',1", 2, 2', 2''), wherein said support elements comprise a plurality of long-limbed elements (4), projecting from the respective lower surfaces (1'a, 2'a) and inclined according to an appropriate angle contained in a plane perpendicular to said surfaces (1'a, 2'a) of said support elements, **characterized in that** each support element (1, 1',1",2,2',2") comprises a first plate (10) from which said long-limbed elements project (4) and a second plate (11) placed under said first plate comprising as many through holes as the long-limbed elements are; said long-limbed elements (4) passing through said through holes; said second Plate being suitable to translate with respect to said first plate in order to determine a variation of the angle of inclination of said long-limbed elements (4).

2. Device according to claim 1, wherein said coefficient of friction varies through time according to said approaching and departing actions.

3. Device according to claim 2, wherein the coefficient of friction of said first support element or of said second support element increases before a reciprocal departing movement of said support elements and decreases immediately after that and wherein the coefficient of friction of said second support element /or first support element increases before a reciprocal approaching movement of said support elements.

4. Device according to claim 1, wherein said long-limbed elements are made of metal and/or of a synthetic material.

5. Device according to claim 4, wherein a first part (4) of said long-limbed elements is more stiff than a second part (4') of said long-limbed elements and wherein said second part (4') comprises longer long-limbed elements than the long-limbed elements comprised in said first part.

6. Device according to the previous claims, further comprising approaching and/or departing means (3) of said support elements (1, 1', 1",2, 2', 2") of the electromechanical and/or mechanical and/or pneumatic and/or internal combustion type and at least an interconnection element (31) of said support elements.

7. Device according to claim 6, wherein said approaching and/or departing means (3) are suitable for determining an approaching/departing movement according to a plurality of different frequencies.

8. Device according to claims 6 or 7, further comprising elastic means (32) suitable to contrast the action of said approaching or departing means of said support elements (1, 1', 1",2, 2', 2").

9. Device according to any of the previous claims, wherein a first pair of support elements (1, 1', 1'', 2, 2', 2'') reciprocally movable and connected by means of said interconnection element (31) is associated to a second pair of support elements, independent from said first pair and comprising a second interconnection element (31'), said association being realized by means of a cross bridge (33) integral with said interconnection elements (31,31').

10. Operating method of a traction device according to one of preceding claims, the method comprising that the following steps are performed at least once:
- approaching of said support elements,
- departing of said support elements.

11. Method according to claim 10, wherein said coefficient of friction varies through time, said method comprising that the following steps are performed at least once:
- lowering of the coefficient of friction of said first (1,1',1'') support element,
- departing of said first support element from said second support element,
- increasing of the coefficient of friction of said first support element,
- lowering of the coefficient of friction of said second support element (2, 2',2''),
- approaching of said second support element to said first support element.

12. Device according to claim 10, wherein said coefficient of friction is anisotropic according to a sense of said direction of movement.

## Patentansprüche

1. Trägheitsantriebsvorrichtung, umfassend zumindest ein erstes Trägerelement (1, 1', 1") und ein zweites Trägerelement (2, 2', 2"), die zwischen einer proximalen Position und einer distalen Position vor - und zurückbewegbar sind; wobei jedes Trägerelement einen variablen Reibungskoeffizienten mit Bezug auf eine Trägerfläche (S, W) aufweist, so dass während einer Vor- und Zurück-Annäherungsbewegung eine Reibungskraft (Ff1), die durch eines der Trägerelemente entwickelt wird, (Ff1 > Ff2, Ff1 < Ff2) vorherrscht und während einer Vor- und Zurück-Entfernungsbewegung der Trägerelemente eine Reibungskraft (Ff2), die durch das andere der Trägerelemente entwickelt wird, (Ff1 < Ff2, Ff1 > Ff2) vorherrscht, wobei der Reibungskoeffizient entlang einer Vor- und Zurück-Bewegungsrichtung (V) der Trägerelemente (1, 1', 1", 2, 2', 2") anisotrop ist, wobei die Trägerelemente eine Vielzahl von langschenkligen Elementen (4) umfassen, die von den jeweiligen unteren Flächen (1'a, 2'a) vorstehen und gemäß einem geeigneten Winkel geneigt sind, der in einer Ebene senkrecht zu den Flächen (1'a, 2'a) der Trägerelemente enthalten ist, **dadurch gekennzeichnet, dass** jedes Trägerelement (1, 1', 1", 2, 2', 2") eine erste Platte (10), von der aus die langschenkligen Elemente vorstehen (4), und eine zweite Platte (11) umfasst, die unter der ersten Platte platziert ist und so viele Durchgangslöcher umfasst, wie die langschenkligen Elemente vorhanden sind; wobei die langschenkligen Elemente (4) durch die Durchgangslöcher verlaufen; wobei die zweite Platte geeignet ist, sich mit Bezug auf die erste Platte zu verschieben, um eine Veränderung des Neigungswinkels der langschenkligen Elemente (4) festzulegen.

2. Vorrichtung nach Anspruch 1,
wobei der Reibungskoeffizient über die Zeit gemäß den Annäherungs- und Entfernungsaktionen variiert.

3. Vorrichtung nach Anspruch 2,
wobei der Reibungskoeffizient des ersten Trägerelements oder des zweiten Trägerelements vor der Vor- und Zurück-Entfernungsbewegung der Trägerelemente zunimmt und unmittelbar danach abnimmt, und wobei der Reibungskoeffizient des zweiten Trägerelements oder des ersten Trägerelements vor einer Vor- und Zurück-Annäherungsbewegung der Trägerelemente zunimmt.

4. Vorrichtung nach Anspruch 1,
wobei die langschenkligen Elemente aus Metall und/ oder aus einem synthetischen Material hergestellt sind.

5. Vorrichtung nach Anspruch 4,
wobei ein erster Teil (4) der langschenkligen Elemente steifer ist als ein zweiter Teil (4') der langschenkligen Elemente, und wobei der zweite Teil (4') längere langschenklige Elemente als die in dem ersten Teil enthaltenen, langschenkligen Elemente umfasst.

6. Vorrichtung nach den vorhergehenden Ansprüchen,
die ferner Annäherungs- und/oder Entfernungsmittel (3) der Trägerelemente (1, 1', 1", 2, 2', 2") von dem elektromechanischen und/oder mechanischen und/oder pneumatischen und/oder Brennkrafttyp und zumindest ein Verbindungselement (31) der Trägerelemente umfasst.

7. Vorrichtung nach Anspruch 6,
wobei die Annäherungs- und/oder Entfernungsmittel (3) geeignet sind, um eine Annäherungs-/Entfernungsbewegung gemäß einer Vielzahl von unterschiedlichen Frequenzen festzulegen.

8. Vorrichtung nach den Ansprüchen 6 oder 7,
die ferner elastische Mittel (32) umfasst, die geeignet sind, der Aktion der Annäherungs- oder Entfernungsmittel der Trägerelemente (1, 1', 1", 2, 2', 2") entgegenzuwirken.

9. Vorrichtung nach einem der vorhergehenden Ansprüche,
wobei ein erstes Paar Trägerelemente (1, 1', 1", 2, 2', 2"), das vor - und zurückbewegbar und mittels des Verbindungselements (31) verbunden ist, einem zweiten Paar Trägerelemente zugeordnet ist, das von dem ersten Paar unabhängig ist und ein zweites Verbindungselement (31') umfasst, wobei die Zuordnung mittels einer Querbrücke (33) realisiert ist, die mit den Verbindungselementen (31, 31') einstückig ist.

10. Betriebsverfahren einer Antriebsvorrichtung nach einem der vorhergehenden Ansprüche,
wobei das Verfahren umfasst, dass die folgenden Schritte zumindest einmal durchgeführt werden:
- Annähern der Trägerelemente,
- Entfernen der Trägerelemente.

11. Verfahren nach Anspruch 10,
wobei der Reibungskoeffizient über die Zeit variiert und das Verfahren umfasst, dass die folgenden Schritte zumindest einmal durchgeführt werden:
- Verringern des Reibungskoeffizienten des ersten (1, 1', 1") Trägerelements,
- Entfernen des ersten Trägerelements von dem zweiten Trägerelement,
- Erhöhen des Reibungskoeffizienten des ersten Trägerelements,
- Verringern des Reibungskoeffizienten des zweiten Trägerelements (2, 2', 2"),
- Annähern des zweiten Trägerelements an das erste Trägerelement.

12. Vorrichtung nach Anspruch 10,
wobei der Reibungskoeffizient gemäß einem Sinn der Bewegungsrichtung anisotrop ist.

## Revendications

1. Dispositif de traction à impulsion comprenant au moins un premier élément de support (1, 1', 1'') et un second élément de support (2, 2', 2") mobile en va-et-vient entre une position proximale et une position distale ; chaque élément de support ayant un coefficient de frottement variable par rapport à une surface de support (S,W), dans lequel pendant un mouvement d'approche en va-et-vient, une force de frottement (Ff1) développée par un desdits éléments de support prédomine (Ffl>Ff2, Ffl<Ff2) et pendant un mouvement d'éloignement en va-et-vient desdits éléments de support, une force de frottement (Ff2) développée par l'autre desdits éléments de support prédomine (Ff1<Ff2, Ff1>Ff2), dans lequel ledit coefficient de frottement est anisotrope le long d'une direction de mouvement (V) en va-et-vient desdits éléments de support (1, 1', 1 ", 2, 2', 2 "), dans lequel lesdits éléments de support comprennent une pluralité d'éléments à longs membres (4), dépassant des surfaces inférieures respectives (1'a, 2'a) et inclinés selon un angle approprié contenu dans un plan perpendiculaire auxdites surfaces (1'a, 2'a) desdits éléments de support, **caractérisé en ce que** chaque élément de support (1, 1', 1", 2, 2', 2") comprend une première plaque (10) de laquelle lesdits éléments à longs membres dépassent (4) et une seconde plaque (11) placée sous ladite première plaque comprenant autant de trous traversants que le nombre d'éléments à longs membres ; lesdits éléments à longs membres (4) passant à travers lesdits trous traversants ; ladite seconde plaque étant appropriée pour se déplacer par rapport à ladite première plaque afin de déterminer une variation de l'angle d'inclinaison desdits éléments à longs membres (4).

2. Dispositif selon la revendication 1, dans lequel ledit coefficient de frottement varie au cours du temps selon lesdites actions d'approche et d'éloignement.

3. Dispositif selon la revendication 2, dans lequel ledit coefficient de frottement dudit premier élément de support ou dudit second élément de support augmente avant un mouvement d'éloignement en va-et-vient desdits éléments de support et diminue immédiatement après et dans lequel le coefficient de frottement dudit second élément de support ou dudit premier élément de support augmente avant le mouvement d'approche en va-et-vient desdits éléments de support.

4. Dispositif selon la revendication 1, dans lequel lesdits éléments à longs membres sont en métal et/ou en matériau synthétique.

5. Dispositif selon la revendication 4, dans lequel une première partie (4) desdits éléments à longs membres est plus raide qu'une seconde partie (4') desdits éléments à longs membres et dans lequel ladite seconde partie (4') comprend des éléments à longs membres plus longs que les éléments à longs membres compris dans ladite première partie.

6. Dispositif selon les revendications précédentes, comprenant en outre des moyens d'approche et/ou d'éloignement (3) desdits éléments de support (1, 1', 1", 2, 2', 2") du type électromécanique et/ou mécanique et/ou pneumatique et/ou à combustion interne et au moins un élément d'interconnexion (31) desdits éléments de support.

7. Dispositif selon la revendication 6, dans lequel lesdits moyens d'approche et/ou d'éloignement (3) sont appropriés pour déterminer un mouvement d'approche/d'éloignement selon une pluralité de fréquences différentes.

8. Dispositif selon la revendication 6 ou 7, comprenant en outre un moyen élastique (32) approprié pour contraster l'action desdits moyens d'approche ou d'éloignement desdits éléments de support (1, 1', 1", 2, 2', 2").

9. Dispositif selon l'une quelconque des revendications précédentes, dans lequel une première paire d'éléments de support (1, 1', 1", 2, 2', 2") mobiles en va-et-vient et connectés au moyen dudit élément d'interconnexion (31) est associée à une seconde paire d'éléments de support, indépendante de ladite première paire et comprenant un second élément d'interconnexion (31'), ladite association étant réalisée au moyen d'un pont croisé (33) solidaire desdits éléments d'interconnexion (31, 31').

10. Procédé de fonctionnement d'un dispositif de traction selon l'une des revendications précédentes, le procédé comprenant la réalisation au moins une fois des étapes suivantes :
- approche desdits éléments de support,
- éloignement desdits éléments de support.

11. Procédé selon la revendication 10, dans lequel ledit coefficient de frottement varie au cours du temps, ledit procédé comprenant la réalisation au moins une fois des étapes suivantes :
-- abaissement du coefficient de frottement dudit premier élément de support (1, 1', 1"),
-- éloignement dudit premier élément de support depuis ledit second élément de support,
-- augmentation du coefficient de frottement dudit premier élément de support,
-- abaissement du coefficient de frottement dudit second élément de support (2, 2', 2"),
-- approche dudit second élément de support vers ledit premier élément de support.

12. Dispositif selon la revendication 10, dans lequel ledit coefficient de frottement est anisotrope selon un sens de ladite direction de mouvement.
